# EUROPEAN PATENT APPLICATION

(11) **EP 3 242 171 A1**
(43) Date of publication of application: **08.11.2017**
(21) Application number: 15875671.8
(22) Date of filing: 29.12.2015
(51) Int. Cl.: G05B 19/02, H02J 1/00

(54) **REDUNDANT CONTROL SYSTEM**

(30) Priority: 29.12.2014 KR 20140192751
(71) Applicant: Hyosung Corporation, Seoul 04144 (KR)
(72) Inventor: OH, Sung Min, Seoul 01422 (KR); LEE, Dong Gyu, Gwangmyeong-si Gyeonggi-do 14230 (KR)
(74) Representative: Viering, Jentschura & Partner mbB Patent- und Rechtsanwälte
(86) International application number: PCT/KR2015/014405
(87) International publication number: WO 2016/108577

(57) **Abstract**

Disclosed herein is a redundant control system. The redundant control system includes a clock generation unit for generating clocks at preset periods; a first buffer for storing control data output from a first controller; a second buffer for storing control data output from a second controller; first and second state monitors for checking whether pieces of control data of the first and second controllers, stored in the first and second buffers, respectively, are present during an identical clock period among the clocks provided by the clock generation unit; a switching unit for performing switching so that any one of the pieces of control data of the first and second controllers, stored in the first and second buffers, is transmitted to lower modules; and a control unit for determining whether a fault occurs in each of the first and second controllers, based on results that are obtained by checking whether the pieces of control data of the first and second controllers are present and that are output from the first and second state monitors, and controlling the switching unit based on results of the determination.

## Description

### Technical Field

The present invention generally relates to a redundant control system and, more particularly, to a redundant control system, which checks whether pieces of control data, output from respective controllers, are present during the same clock period, determines whether a fault occurs in each controller, based on the result of checking, and then performs control such that the system is continuously operated using a controller in which a fault does not occur.

### Background Art

A High Voltage Direct Current (HVDC) system is a system in which produced Alternating Current (AC) power is converted into Direct Current (DC) power and the DC power is transmitted, and in which a power receiving unit re-converts the DC power into AC power and supplies the AC power.

The most important part in the HVDC system includes reliability and stability. Even if a fault occurs inside or outside of a controller for controlling power, the system must be able to maintain its normal operation.
To stably operate such an HVDC system, a controller must be designed to be configured in a duplex structure, thus preventing a problem from occurring in the system due to a fault in the controller.

In conventional technology, when a main controller has a fault, a sub-controller is switched to perform operation, but a predetermined time is required for the sub-controller that is waiting to be switched. Further, during a switching operation, control data received from the controller may not be transferred to a lower module, or control data that has been previously transferred may be used.

Due to such problems, a system requiring fast control, such as the HVDC system, may have a failure in normally operating the system.

### Disclosure

### Technical Problem

The present invention has been made keeping in mind the above problems, and an object of the present invention is to provide a redundant control system, which checks whether pieces of control data, output from first and second controllers, are present during the same clock period, determines whether a fault occurs in each of the first and second controllers, based on the result of checking, and then performs control using one of the first and second controllers, in which a fault does not occur.

### Technical Solution

A redundant control system according to the present invention includes a clock generation unit for generating clocks at preset periods; a first buffer for storing control data output from a first controller; a second buffer for storing control data output from a second controller; first and second state monitors for checking whether pieces of control data of the first and second controllers, stored in the first and second buffers, respectively, are present during an identical clock period among the clocks provided by the clock generation unit; a switching unit for performing switching so that any one of the pieces of control data of the first and second controllers, stored in the first and second buffers, is transmitted to lower modules; and a control unit for determining whether a fault occurs in each of the first and second controllers, based on results that are obtained by checking whether the pieces of control data of the first and second controllers are present and that are output from the first and second state monitors, and controlling the switching unit based on results of the determination.

In the present invention, the control unit may be configured to, when the control data is present in only one of the first and second buffers as a result of checking whether the pieces of control data of the first and second controllers are present, control the switching unit so that switching to the buffer in which the control data is present is performed.

In the present invention, the control unit may be configured to, when pieces of control data are present both in the first and second buffers as a result of checking whether the pieces of control data of the first and second controllers are present, determine that both the first and second controllers are in a normal operation state, and maintain a previous switching state of the switching unit.

In the present invention, each of the first and second state monitors may check, a preset number of times during an identical clock period, whether control data of each of the first and second controllers, stored in the corresponding buffer of the first and second buffers, is present, and determine that a fault occurs in a controller for which control data is not present if control data is not present throughout the preset number of times as a result of checking.

### Advantageous Effects

According to the present invention, switching is possible within a short period of time, so that the malfunction of an HVDC system occurring due to erroneous control data during a time required for determination of switching may be prevented.

Further, according to the present invention, an additional signal line for a duplex controller and a duplex determination device are not installed, thus reducing maintenance costs.

### Description of Drawings

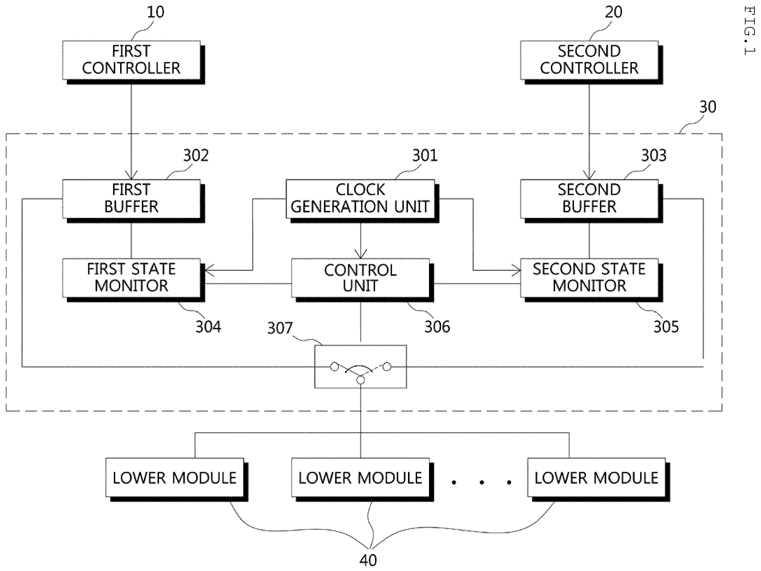

FIG. 1 is a block diagram showing the connection of a redundant control system according to an embodiment of the present invention.

### Best Mode

Preferred embodiments of the present invention will be described in detail below with reference to the accompanying drawings. Descriptions of known functions or configurations which have been deemed to make the gist of the present invention unnecessarily obscure will be omitted below.

FIG. 1 is a block diagram showing the connection of a redundant control system according to an embodiment of the present invention.

First and second controllers 10 and 20 are configured to perform the same function and are operated in an active state in a normal condition. The first and second controllers 10 and 20 individually and simultaneously output the same control data, and the output control data is transferred to a redundant control system 30.

The redundant control system 30 implements a duplex structure of the first and second controller 10 and 20 using respective pieces of control data output from the first and second controllers 10 and 20. Referring to FIG. 1, the redundant control system 30 includes a clock generation unit 301, a first buffer 302, a second buffer 303, a first state monitor 304, a second state monitor 305, a control unit 306, and a switching unit 307.

The clock generation unit 301 generates clocks at preset periods. The generated clocks are provided to the first and second state monitors 304 and 305 and to the control unit 301.

The first buffer 302 stores the control data output from the first controller 10, and the second buffer 303 stores the control data output from the second controller 20. The pieces of control data, output from the first and second controllers 10 and 20, are finally transferred to lower modules 40.

The first state monitor 304 checks whether control data stored in the first buffer 302 is present during the same clock period of the clocks provided by the clock generation unit 301, and the second state monitor 305 checks whether control data stored in the second buffer 303 is present during the same clock period.

More specifically, the first and second controllers 10 and 20 are operated to transmit control data in synchronization with the same clock. Therefore, in a normal case, the pieces of control data transmitted from the first and second controllers 10 and 20 in synchronization with the same clock must be simultaneously present both in the first and second buffers 302 and 303.

The control unit 306 determines whether a fault occurs in each of the first and second controllers 10 and 20, based on the results which are obtained by checking whether pieces of control data from the first and second controllers 10 and 20 are present and which are output from the first and second state monitors 304 and 305. For example, if it is checked that the control data from the first controller 10 is present in the first buffer 10, but if it is checked that the control data from the second controller 20 is not present in the second buffer 20, the second controller 20 is incapable of transmitting the control data, and thus the control unit 306 determines that a fault occurs in the second controller 20.

In contrast, even in the case where it is checked that the control data from the second controller 20 is present in the second buffer 20, but it is checked that the control data from the first controller 10 is not present in the first buffer 10, the control unit 306 determines that a fault occurs in the first controller 20.

When a fault occurs in any one of the first and second controllers 10 and 20, the switching unit 307 is switched under the control of the control unit 306. For example, when if it is determined that a fault occurs in the second controller 20, switching to the first controller 10 is performed so that the first controller 10 is continuously maintained in an operation state. In contrast, if a fault occurs in the first controller 10, switching to the second controller 20 is performed so that the second controller 20 is continuously maintained in an operation state.

That is, in the present invention, even if a fault occurs in any one of the first and second controllers 10 and 20 in an active state, the operation state of the other controller is maintained, thus enabling the control data to be transferred to the lower modules 40.

If pieces of control data from the first and second controllers 10 and 20 are present in the first and second buffers 302 and 303, respectively, the control unit 306 determines that both the first and second controllers 10 and 20 are in normal operation states, and maintains the previous switching state of the switching unit 307. The reason for this is that both the first and second controllers 10 and 20 are normally operated, and thus pieces of control data may be transferred from both the first and second controllers 10 and 20 to the lower modules 40 regardless of the operation of the switching unit 307.

Further, the control unit 306 may also determine that a fault occurs in the controller for which control data is not present, if the case where the corresponding control data is not present in any of the first and second buffers 302 and 303 during the same clock period when pieces of control data from the first and second controllers 10 and 20 are checked occurs a predetermined number of times.

Each of the first and second state monitors 304 and 305 may check, a preset number of times during the same clock period, whether control data of each of the first and second controllers 10 and 20, stored in the corresponding one of the first and second buffers 302 and 303, is present, and may determine that a fault occurs in the controller for which control data is not present if the control data is not present throughout the preset number of times, based on the results of checking. Here, the preset number of times denotes the number of times that the presence of control data is checked during the same clock period, and may be set to one or more times.

Below, the operating procedure of the redundant control system having the above configuration will be described in detail.

First, in a normal operation, the first and second controllers 10 and 20 are maintained in an active state, and output pieces of control data to the first and second buffers 302 and 303, respectively. Then, the first and second state monitors 304 and 305 check whether the pieces of control data of the first and second controllers 10 and 20, stored in the first and second buffers 302 and 303, are present during a clock period supplied by the clock generation unit 301. Next, the first and second state monitors 304 and 305 transmit the results of checking to the control unit 306. The control unit 306 determines whether a fault occurs in each of the first and second controllers 10 and 20, using the results of checking, received from the first and second state monitors 304 and 305.

If, as a result of checking whether pieces of control data from the first and second controllers 10 and 20 are present, control data from any one controller is not present during the same clock period, and it is determined that a fault occurs in the controller, the control unit 306 operates the switching unit 307 so that the controller for which control data is present is maintained in a normal operation state.

Further, if it is checked that the pieces of control data from both the first and second controllers 10 and 20 are present, the control data from both the first and second controllers 10 and 20 may be transmitted to the lower modules 40, and thus the control unit 306 maintains the previous switching state of the switching unit 307 so that the states of the first and second controllers 10 and 20 are maintained.

In this way, the present invention may determine a controller in which a fault occurs merely by checking the presence or absence of control data without requiring a separate signal line (communication line) to check the states of the first and second controllers.

Further, even if the first and second controllers are operated in an active state and a fault occurs in any one controller, the state of a normally operating controller may be maintained, and thus respective controllers may be complementarily operated and prevent the missing of control data, with the result that efficiency may be improved.

As described above, although the present invention has been described in detail with reference to preferred embodiments, it should be noted that the present invention is not limited to the description of these embodiments. It is apparent that those skilled in the art to which the present invention pertains can perform various changes or modifications of the present invention without departing from the scope of the accompanying claims and those changes or modifications belong to the technical scope of the present invention although they are not presented in detail in the embodiments. Accordingly, the technical scope of the present invention should be defined by the accompanying claims.

## Claims

1. A redundant control system, comprising:
a clock generation unit for generating clocks at preset periods;
a first buffer for storing control data output from a first controller;
a second buffer for storing control data output from a second controller;
first and second state monitors for checking whether pieces of control data of the first and second controllers, stored in the first and second buffers, respectively, are present during an identical clock period among the clocks provided by the clock generation unit;
a switching unit for performing switching so that any one of the pieces of control data of the first and second controllers, stored in the first and second buffers, is transmitted to lower modules; and
a control unit for determining whether a fault occurs in each of the first and second controllers, based on results that are obtained by checking whether the pieces of control data of the first and second controllers are present and that are output from the first and second state monitors, and controlling the switching unit based on results of the determination.

2. The redundant control system of claim 1, wherein the control unit is configured to, when the control data is present in only one of the first and second buffers as a result of checking whether the pieces of control data of the first and second controllers are present, control the switching unit so that switching to the buffer in which the control data is present is performed.

3. The redundant control system of claim 1, wherein the control unit is configured to, when pieces of control data are present both in the first and second buffers as a result of checking whether the pieces of control data of the first and second controllers are present, determine that both the first and second controllers are in a normal operation state, and maintain a previous switching state of the switching unit.

4. The redundant control system of claim 1, wherein each of the first and second state monitors checks, a preset number of times during an identical clock period, whether control data of each of the first and second controllers, stored in the corresponding buffer of the first and second buffers, is present, and determines that a fault occurs in a controller for which control data is not present if control data is not present throughout the preset number of times as a result of checking.
